# EUROPÄISCHE PATENTSCHRIFT

(11) **EP 1 398 223 B1**
(45) Veröffentlichungstag und Bekanntmachung des Hinweises auf die Patenterteilung: **06.02.2008**
(21) Anmeldenummer: 03020398.8
(22) Anmeldetag: 10.09.2003
(51) Int. Cl.: B60R 19/24, B60R 11/00

(54) **Vorrichtung zur Befestigung eines Stossfängerüberzugs an einem Fahrzeug, insbesondere an einem Kraftfahrzeug**
Device for fastening a bumper skin to a vehicle, in particular an automotive vehicle
Dispositif de fixation d'une peau de pare-chocs sur un véhicule, un véhicule automobile en particulier

(30) Priorität: 10.09.2002 DE 10242172
(43) Veröffentlichungstag der Anmeldung: 17.03.2004
(73) Patentinhaber: AUDI AG, 85045 Ingolstadt (DE)
(72) Erfinder: Broich, Stefan, 74918 Angelbachtal (DE); Sigloch, Bernd, 74336 Brackenheim (DE)
(74) Vertreter: Patzelt, Heike Anna Maria

(56) Entgegenhaltungen:
- DE-A- 19 912 267

## Beschreibung

Die Erfindung betrifft eine Vorrichtung zur Befestigung eines Stoßfängerüberzugs an einem Fahrzeug, insbesondere an einem Kraftfahrzeug, nach dem Oberbegriff des Anspruchs 1. Aus der DE 19 912 267 ist eine derartige Vorrichtung bekannt.

Im Rahmen der Fahrzeugmontage wird ein Stoßfängerüberzug regelmäßig erst am Ende der Fahrzeugmontage am Fahrzeug befestigt. Dazu muss der Werker z. B. im Falle eines Stoßfängerüberzugs am Heck-Abschlussteil vom Kofferraum aus die Befestigung des Stoßfängerüberzugs am Abschlussteil vornehmen. Konkret werden hierzu von der Kofferrauminnenseite ausgehend Befestigungsschrauben durch das Heck-Abschlussteil hindurch in die entsprechend zugeordneten Befestigungsstellen am Stoßfängerüberzug eingeschraubt. Wenigstens ein Teil dieser Befestigungsstellen ist regelmäßig nur sehr schwer zugänglich, da dieser Bereich mit fortschreitender Montage immer mehr durch andere Bauteile verbaut wird. Deshalb ist es in der Praxis oftmals sogar erforderlich, dass die Karosserie am Ende der Fahrzeugmontage nochmals angehoben wird, um eine Zugänglichkeit zu den Befestigungsstellen zur Befestigung des Stoßfängerüberzugs am Heck-Abschlussteil herzustellen. Grundsätzlich die gleiche Problematik kann sich auch bei der Montage eines Stoßfängerüberzugs am Fahrzeugfrontend ergeben.

Aufgabe der Erfindung ist es daher, eine Vorrichtung zur Befestigung eines Stoßfängerüberzugs an einem Fahrzeug, insbesondere an einem Kraftfahrzeug, zu schaffen, mit der ein Stoßfängerüberzug jederzeit einfach und schnell am Fahrzeug befestigt werden kann.

Diese Aufgabe wird gelöst mit den Merkmalen des Anspruchs 1.

Gemäß Anspruch 1 wird die Verlagerungseinrichtung am Basisteil durch ein Schneckengetriebe gebildet, das mit dem Rastteil gekoppelt ist und eine Antriebsschnecke sowie ein mit der Antriebsschnecke kämmendes Schneckenrad aufweist. Der Vorteil eines derartigen Schneckengetriebes liegt darin, dass es selbsthemmend ist, so dass nach der Betätigung des Schneckengetriebes dieses in der einmal eingenommenen Position verbleibt und damit eine funktionssichere Verriegelung des Stoßfängerüberzugs über die erfindungsgemäße Vorrichtung am Fahrzeug, insbesondere am Fahrzeug-Abschlussteil möglich ist. Dadurch kann eine eventuell erforderliche Sicherung der Verlagerungseinrichtung gegen ungewollte oder unerlaubte Betätigung entfallen.

Gemäß einer besonders bevorzugten Ausgestaltung nach Anspruch 2 ist das Rastteil durch eine Rastleiste gebildet, die in Rastleistenlängsrichtung gesehen mehrere voneinander beabstandete Rast-Aufnehmungen aufweist. Eine Anbindung des Stoßfängerüberzugs mit einer Vielzahl von Rastbolzen ist deshalb vorteilhaft, da hierdurch eine wenig wacklige und stabile Anbindung des Stoßfängerüberzugs am Fahrzeug erreicht wird. Grundsätzlich könnte das erfindungsgemäße Prinzip jedoch auch mit einer einzigen Rast-Ausnehmung realisiert werden, z. B. dann, wenn die Befestigungsstelle so verbaut ist, dass eine Verriegelung nur über die entfernt dazu angeordnete Verlagerungseinrichtung möglich ist.

Weiter können die Rast-Ausnehmungen dabei so ausgebildet sein, dass diese in der Verriegelungsstellung einen Rastbolzen-Teilbereich hintergreifen. Gemäß einer konkreten Ausführungsform hierzu ist nach Anspruch 3 vorgesehen, die Rast-Ausnehmung durch einen in Rastleistenlängsrichtung als Verlagerungseinrichtung verlaufenden Rastschlitz auszubilden, der z. B. schlüssellochartig und/oder keilförmig von der Geometrie her ausgebildet sein kann. Dieser Rastschlitz weist einen ersten Schlitzbereich als Verriegelungsbereich auf, der im verriegelten Zustand einen entsprechend zugeordneten Rastbolzen-Verriegelungsbereich am Rastbolzen hintergreift und der in einem zweiten, sich an den ersten Schlitzbereich anschließenden Schlitzbereich mit einem Übermaß gegenüber dem Rastbolzen-Verriegelungsbereich ausgebildet ist, so dass der Rastbolzen im zweiten Schlitzbereich der Rast-Ausnehmung einführbar und/oder durchsteckbar ist. Bevorzugt ist hierbei der Rastbolzen-Verriegelungsbereich am freien Rastbolzenende durch eine sich daran anschließende Abstufung und/oder eine Umfangsreduzierung ausgebildet, um einen Nutbereich auszubilden. Der zweite Schlitzbereich liegt dabei in Verlagerungsrichtung der Rastleiste gesehen vor dem ersten Schlitzbereich, so dass die in den zweiten Schlitzbereich eingeführten Rastbolzen bei einer Verlagerung der Rastleiste in die Verlagerungsrichtung mit dem ersten Schlitzbereich verriegelbar sind. Ein derartiger Aufbau ist relativ einfach und preiswert herzustellen, wobei zudem durch die Schlitzgeometrie auf einfache Weise eine funktionssichere Verriegelung der Rastbolzen erfolgen kann. Ein weiterer Vorteil eines derartigen Aufbaus ist, dass der Stoßfängerüberzug mit den entsprechend ausgebildeten Rastbolzen für eine Art Vormontage noch vor der eigentlichen Stoßfängerüberzugmontage in dem Bereich der Rast-Ausnehmung eingehängt werden kann.

Nach Anspruch 4 ist das Rastteil, vorzugsweise die Rastleiste, so am Basisteil gelagert und/oder aus einem solchen Material hergestellt, dass das Rastteil bei der Verriegelung des Rastbolzens in der Rast-Ausnehmung wenigstens teilweise federartig nachgibt und den Rastbolzen unter Vorspannung verriegelt. Durch eine derartige Ausbildung der Vorrichtung und insbesondere des Rastteils wird ein vorteilhafter Toleranzausgleich möglich, so dass die Befestigung des Stoßfängerüberzugs am Abschlussteil stabil und nicht wacklig ausgeführt werden kann. Das Anliegen unter Vorspannung bewirkt zudem eine zusätzliche Verriegelungskraft, so dass der Stoßfängerüberzug insgesamt sicher am Fahrzeug befestigbar ist. Gemäß einer konkreten Ausgestaltung hierzu ist nach Anspruch 5 vorgesehen, dass die Rastleiste im Bereich der Rast-Ausnehmung zur Ausbildung der Vorspannfunktion abgewinkelt ist dergestalt, dass lediglich die an die abgewinkelten Rast-Ausnehmungsbereiche angrenzenden Leistenbereiche in einer Anlageverbindung am Basisteil anliegen und sich dort während der Verriegelung abstützen. Mit einer derartigen Abwinkelung der Rastleiste wird erreicht, dass die die Rast-Ausnehmung-aufweisenden Verriegelungsbereich vom Basisteil abgehoben sind und dadurch während der Verriegelung mit den Rastbolzen wenigstens teilweise federartig zum Basisteil hin abgesenkt werden können, um eine Vorspannung aufzubauen. Eine derartige Abwinklung der Rastleiste ist einfach herzustellen, z. B. indem die Rastleiste als Biege- und/oder Stanzprofil ausgebildet ist.

Grundsätzlich wäre es möglich, dass das Basisteil von außer her am Fahrzeug-Abschlussteil anliegt. Dies führt jedoch zur Fahrzeugaußenseite hin zu einem regelmäßig unerwünschten hochbauenden Aufbau. Gemäß Anspruch 6 liegt das Basisteil daher von innen her wenigstens mit Teilbereichen an einem Fahrzeug-Abschlussteil, vorzugsweise ein Heck-Abschlussteil, an, wobei im Fahrzeug-Abschlussteil dann eine jeder Rast-Ausnehmung des Rastteils zugeordnete Abschlussteil-Ausnehmung zur Durchführung des Rastbolzens vorzusehen ist. Dadurch wird erreicht, dass die Rastbolzen des Stoßfängerüberzugs ungehindert durch das Fahrzeug-Abschlussteil hindurch in Richtung zu den Rast-Ausnehmungen geführt werden können. Ebenso ist das Basisteil hier so auszubilden, dass dieses die Zuführung des Rastbolzens zur Rast-Ausnehmung des Rastteils freigibt. Konkret kann hierzu nach Anspruch 7 zur Freigabe der Zuführung zur Rast-Aufnahme am Basisteil eine jeder Rast-Ausnehmung des Rastteils zugeordnete Basisteil-Ausnehmung vorgesehen sein.

Die Fahrzeug-Abschlussteile, insbesondere das Heck-Abschlussteil sind in Fahrzeughochachsenrichtung gesehen oftmals aus Designgründen gewölbt ausgebildet. Nach Anspruch 8 ist daher gemäß einer bevorzugten konkreten Ausgestaltung der Erfindung vorgesehen, dass das Basisteil der in Fahrzeughochachsenrichtung gesehen gewölbten Kontur des Fahrzeug-Abschlussteils folgt. Insbesondere im Falle eines als Rastleiste ausgebildeten Rastteils mit mehreren sich in Fahrzeughochachsenrichtung als Rastleistenlängsrichtung erstreckenden und voneinander beabstandeten Rast-Ausnehmungen weisen die Rast-Ausnehmungen und die Abschlussteil-Ausnehmungen sowie gegebenenfalls die Basisteil-Ausnehmungen im gewölbten Bereich in etwa eine Langlochgeometrie auf. Diese Langlochgeometrie wird mit zunehmendem Krümmungsradius des gewölbten Bereiches in der Längenausdehnung größer. Dagegen weisen die Rast-Ausnehmungen und die Abschlussteil-Ausnehmungen sowie gegebenenfalls die Basisteil-Ausnehmungen in nicht gewölbten Bereichen eine in etwa kreisrunde Lochgeometrie auf. Eine derartige Lochgeometrie in gewölbten Bereichen ist erforderlich, um ein einfaches und ungehindertes Einfädeln der Rastbolzen durch die Ausnehmungen hindurch möglich zu machen, d. h. insbesondere eine im Wesentlichen horizontale Montagerichtung ohne Verkippen und/oder Verkanten des Stoßfängerüberzugs bei der Montage zu ermöglichen.

Um die Abschlussteil-Ausnehmungen abzudichten, ist nach Anspruch 9 vorgesehen, dass jeder Rastbolzen im montierten Zustand des Stoßfängerüberzugs mittels einer dem Rastbolzen umgebenden Dichtungstülle dicht durch die Abschlussteil-Ausnehmung hindurchgeführt ist. Die Dichtungstülle weist dabei eine Durchführöffnung auf, durch die der Rastbolzen hindurchsteckbar ist. Grundsätzlich kann die Tülle bereits vor dem Einsetzen des Rastbolzens in die Abschlussteil-Ausnehmung eingesetzt werden oder aber auch die Tülle auf den Stoßfängerüberzug-Rastbolzen aufgeschoben sein. Insbesondere bei den zuvor erwähnten Abschlussteil-Langlöchern ist eine spezielle Ausbildung der Dichtelemente erforderlich, so dass nach Anspruch 10 vorgesehen ist, die abschlussteilseitige Abdichtung der Abschlussteil-Langlöcher gegenüber dem jeweils zugeordneten Rastbolzen durch Langloch-Tüllen herzustellen. Dazu weisen die Langloch-Tüllen in der zuvor beschriebenen Art und Weise eine Rastbolzen-Durchführöffnung auf, durch die der Rastbolzen dicht durchführbar ist. Die Langlochtüllen decken dabei den gesamten Ausnehmungsbereich ab und können vorteilhaft auch noch beabstandet zur Rastbolzen-Durchführöffnung ein Tüllen-Zentrierza'pfen aufweisen, dem eine entsprechende Zentrierausnehmung am Stoßfängerüberzug im Bereich des Rastbolzens zugeordnet ist. Dadurch wird erreicht, dass der Tüllen-Zentrierzapfen im montierten Zustand des Stoßfängerüberzugs im wesentlichen formschlüssig in der Zentrierausnehmung am Stoßfängerüberzug aufgenommen werden kann. Dadurch wird z. B. eine vorteilhafte Zentrierung der Langloch-Tülle im abzudichtenden Abschlussteil-Langlochbereich erreicht bzw. die Langloch-Tülle in Position gehalten.

Gemäß Anspruch 11 sind zur Befestigung des Basisteils am Abschlussteil mehrere Schraubverbindungen vorgesehen. Vorzugsweise sind hierzu am Basisteil entsprechende Schraublöcher ausgebildet, die von innen her im Bereich entsprechender Abschlussteil-Durchgangsöffnungen anliegen, so dass von der Abschlussteil-Außenseite her eine Befestigungsschraube in die Schraublöcher einschraubbar ist. Zur Abdichtung dieses Bereichs kann eine herkömmliche Dichtscheibe bzw. ein herkömmliches Dichtelement vorgesehen sein. Gemäß Anspruch 12 kann am Basisteil auch wenigstens ein Positionierzapfen ausgebildet sein, der in eine entsprechende Positionier-Ausnehmung am Abschlussteil im wesentlich formschlüssig einsetzbar ist. Dadurch wird eine vorteilhafte Vorzentrierung bzw. Vorpositionierung des Basisteils für eine positionsgenaue Befestigung des Basisteils am Abschlussteil erreicht. Im Falle von als Positionieröffnungen bzw. Positionierbohrungen ausgebildeten Positionierausnehmungen können zudem zur Abdichtung des Öffnungsbereichs Dichtelemente vorgesehen sein, die vorzugsweise um den Positionierzapfen herum angeordnet sind. Vorzugsweise sind die Dichtelemente dann mit einem gewissen Randüberstand in eine entsprechende Dichtelementaussparung um den Positionierzapfen herum am Basisteil eingesetzt, so dass im montierten Zustand das Dichtelement im Anlagebereich zur Abdichtung verpresst wird.

Gemäß Anspruch 13 ist der Schneckenantrieb mit einem Spindelantrieb zur Verlagerung des Rastteils verbunden, wobei das Schneckenrad hierzu vorzugsweise mit einer Gewindeschraube als Spindel drehfest verbunden ist. Dieser Gewindeschraube als Spindel ist am Rastteil dann vorteilhaft eine Gewindehülse als Spindelmutter zugeordnet. Diese Spindelmutter ist vorzugsweise als mit dem Rastteil verpresste Blindnietmutter ausgebildet. Ein derartiger Aufbau ist relativ einfach und preiswert mit hoher Funktionssicherheit herzustellen.

Nach Anspruch 14 kann das Basisteil als Gehäuseschale ausgebildet sein, in der die Rastleiste relativ dazu verschiebbar aufgenommen ist. Eine Schalenbasiswand der Gehäuseschale deckt dabei die Rastleiste wenigstens bereichsweise in Rastleistenlängsrichtung gesehen ab. Die Gehäuseschale umgreift die Rastleiste in Verlagerungsrichtung gesehen mit gegenüberliegenden Gehäuseseitenwandbereichen wenigstens teilweise seitlich. In den Gehäuseschalenseitenwandbereichen sind nutförmige Führungsschlitze ausgebildet, in denen die Rastleiste mit an den gegenüberliegenden Leistenseiten wenigstens abschnittsweise ausgebildeten Eingriffselementen verschiebbar geführt und aufgenommen ist. Eine derartige Ausbildung des Basisteils ermöglicht eine besonders vorteilhafte und funktionssichere Relativverschiebung der Rastleiste bzw. des Rastteils bezüglich des Basisteils und ist zudem einfach ohne großen Bauteilaufwand herstellbar, da die ohnehin vorhandenen Bauteile in einer Doppelfunktion verwendet werden können. Um ein die Rastleiste wenigstens bereichsweise vollständig umschließendes Gehäuse auszubilden, in dem die Rastleiste aufgenommen ist, kann nach Anspruch 15 der Gehäuseschale ferner ein Abdeckelement zugeordnet sein, das mit der Gehäuseschale lösbar verbindbar, vorzugsweise verrastbar ist.

Ferner können an der Gehäuseschale und/oder am Abdeckteil bzw. am Basisteil nach Anspruch 16 auch noch weitere Funktionsteile integriert werden, insbesondere für den Fall, dass die Gehäuseschale bzw. das Basisteil als Kunststoffteil ausgebildet ist. So kann beispielsweise an der Gehäuseschale auch eine Befestigungseinrichtung für einen Kabelbaum angeformt sein. Die Gehäuseschale bzw. das Basisteil können somit hier in einer vorteilhaften Doppelfunktion zusätzliche Anbau- und/oder Anbringungsstellen zur Verfügung stellen, die ansonsten nicht vorhanden wären. Dadurch werden somit vorteilhaft zusätzliche Anbaumöglichkeiten geschaffen, die sich vorteilhaft auf die Gesamtanordnung der Bauteile auswirken können.

Grundsätzlich kann der Rastbolzen auch als am Stoßfängerüberzug integriertes Bauteil ausgebildet sein. Gemäß einer bevorzugten Ausgestaltung nach Anspruch 17 ist der Rastbolzen jedoch ein separates Bauteil mit einer form- und/oder kraftschlüssigen Eingriffs- und/oder Rast- und/oder Klemmverbindung an einem als entsprechendes Stoßfängerüberzug-Gegenelement ausgebildeten Stoßfängerüberzug-Schließbereich festlegbar, vorzugsweise verklemmbar und/oder verrastbar. Ein derartiger separater Rastbolzen kann relativ einfach und preiswert hergestellt werden, wobei zudem gegebenenfalls auch durch entsprechende konstruktive Maßnahmen ein gewisser Toleranzausgleich in Verbindung mit der Montage des Stoßfängerüberzugs am Abschlussteil erfolgen kann.

Nach Anspruch 18 ist das Basisteil vorzugsweise aus einem preiswerten Kunststoffmaterial und/oder das Rastteil aus einem Blech, vorzugsweise aus einem federblechartigen Material hergestellt.

Die Erfindung wird nachfolgend anhand einer Zeichnung näher erläutert:

Es zeigen:
- Fig. 1: eine schematische, perspektivische Vorrichtung der erfindungsgemäßen Vorrichtung zur Befestigung eines Stoßfängerüberzugs an einem Fahrzeug,
- Fig. 2: eine schematische Seitenansicht einer Rastleiste,
- Fig. 3: eine schematische Vorderansicht der Rastleiste,
- Fig. 4: eine schematische, perspektivische Ansicht der Rastleiste,
- Fig. 5: eine schematische Vorderansicht der erfindungsgemäßen Vorrichtung nach Fig. 1,
- Fig. 6: eine schematische Schnittansicht durch die erfindungsgemäße Vorrichtung entlang der Linie A-A der Fig. 5 in auseinandergezogener Darstellung,
- Fig. 7: eine schematische Schnittansicht entlang der Linie A-A der Fig. 5 im zusammengebauten Zustand,
- Fig. 8: eine schematische Draufsicht auf die Vorrichtung gemäß Fig. 1 und damit eine Draufsicht auf die als Schneckenantrieb ausgebildete Verlagerungseinrichtung,
- Fig. 9: eine schematische, vergrößerte Schnittansicht durch den oberen Bereich der Befestigungsvorrichtung, wobei die Rastleiste einerseits in einer Rastteil-Grundstellung und andererseits in einer Rastteil-Verriegelungsstellung gezeigt ist,
- Fig. 10: ein schematischer Querschnitt entlang der Linie B-B der Fig. 5,
- Fig. 11: eine schematische Darstellung einer Dichtungstülle für eine in etwa kreisrunde Lochgeometrie,
- Fig. 12: eine schematische, perspektivische Darstellung eines Stoßfängerüberzug-Rastbolzens,
- Fig. 13: eine schematische, teilweise perspektivische Draufsicht auf eine Langloch-Tülle,
- Fig. 14: ein schematischer Querschnitt im Bereich eines Tüllen-Zentrierzapfens, der formschlüssig in der Zentrierausnehmung am Stoßfängerüberzug aufgenommen ist,
- Fig. 15: ein schematischer Querschnitt im Bereich einer eine Langlochgeometrie aufweisenden Abschlussteil-Ausnehmung mit eingesetzter Langloch-Tülle,
- Fig. 16: ein schematischer Querschnitt zur Verdeutlichung der Befestigung der die Rastleiste aufnehmenden Gehäuseschale mittels Befestigungsschrauben von der Innenseite eines Heck-Abschlussteiles her, und
- Fig. 17: ein schematischer Querschnitt zur Verdeutlichung der Anordnung der Positionierzapfen mitsamt zugeordneter Positionierausnehmung zur Vorpositionierung der Gehäuseschale am Heck-Abschlussteil.

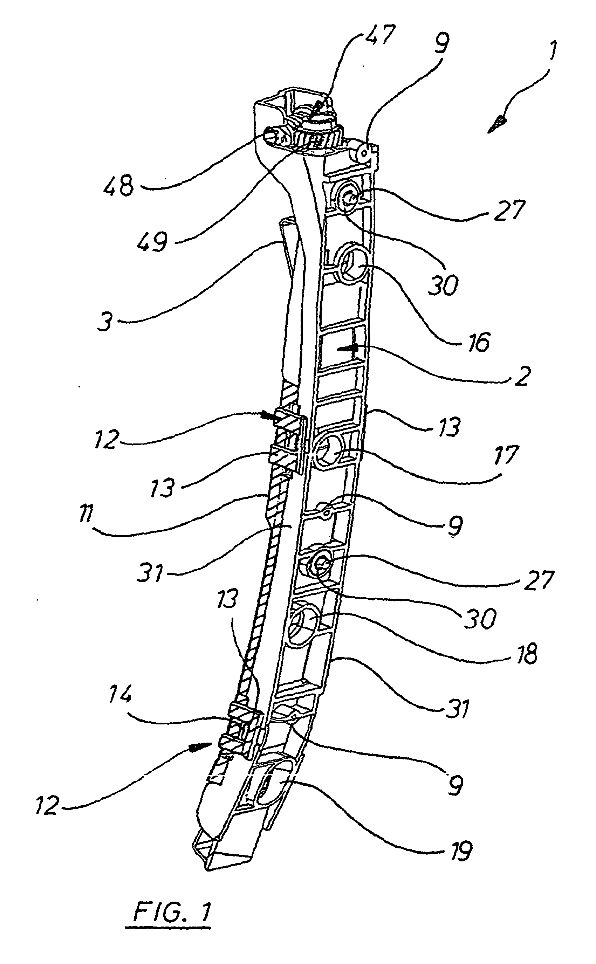

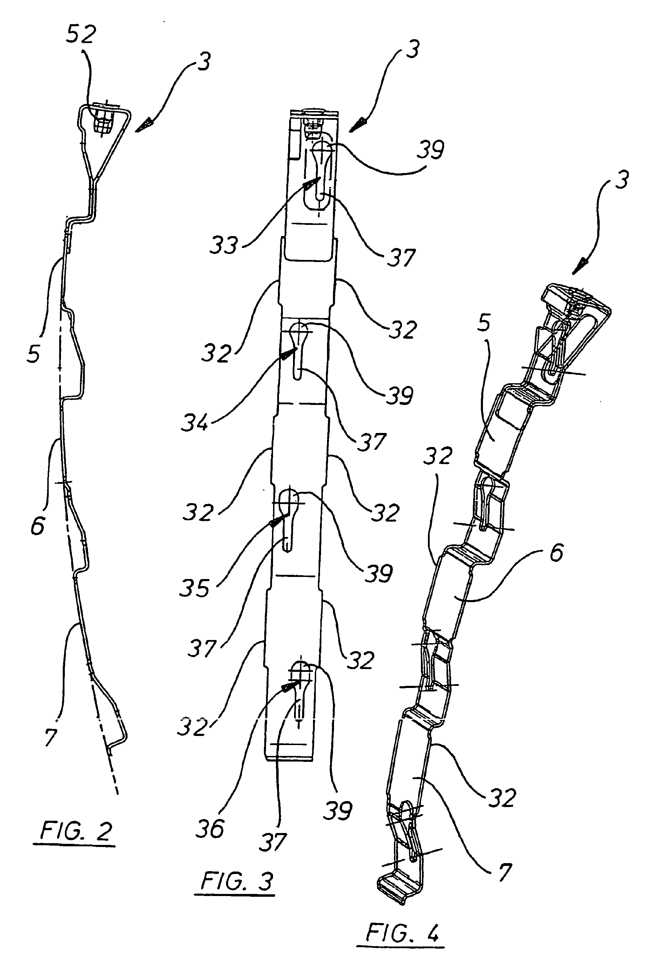

In der Fig. 1 ist schematisch eine erfindungsgemäße Vorrichtung in einer schematischen und perspektivischen Darstellung gezeigt. Diese Befestigungsvorrichtung 1 weist ein in der Fig. 1 als Gehäuseschale 2 ausgebildetes Basisteil auf, an dem eine Rastleiste 3 angeordnet ist, die relativ zur Gehäuseschale 2 verlagerbar ist. Die Rastleiste 3 als separates Bauteil ist in unterschiedlichen Ansichten in den Fig. 2 bis 4 dargestellt. Auf die Funktion und Verwendung der Rastleiste 3 wird nachfolgend noch näher eingegangen.

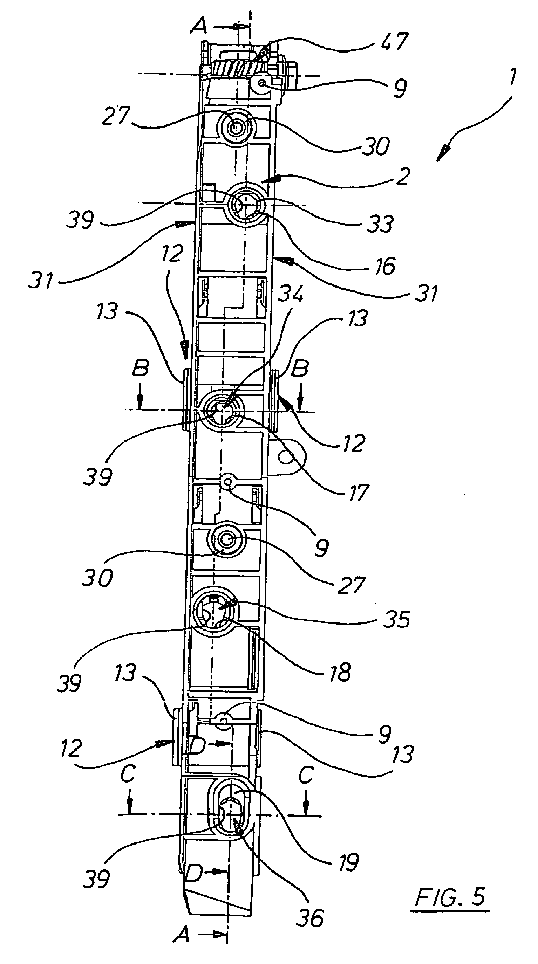

Wie dies aus Fig. 1 weiter ersichtlich ist, ist der Gehäuseschale 2 ferner ein Abdeckelement 11 zugeordnet, das zur Ausbildung eines die Rastleiste wenigstens bereichsweise vollständig umschließenden Gehäuses mit der Gehäuseschale 2 über Rastverbindungen 12 lösbar verbunden ist. Die Rastverbindungen 12 sind hier durch jeweils zwei zu beiden Seiten des Abdeckelements 11 angeordnete Rastlaschen 13 gebildet, denen jeweils ein entsprechendes Rastgegenelement 14 als Rastnase zu beiden Seiten der Gehäuseschale zugeordnet ist. In der Darstellung der Fig. 1 ist lediglich eine Seite dieser Rastverbindungen 12 gezeigt, in der Darstellung der Fig. 5 sind jedoch die beidseitig angeordneten Rastverbindungen 12 ersichtlich. Die Fig. 5 zeigt eine schematische Vorderansicht der Darstellung nach Fig. 1.

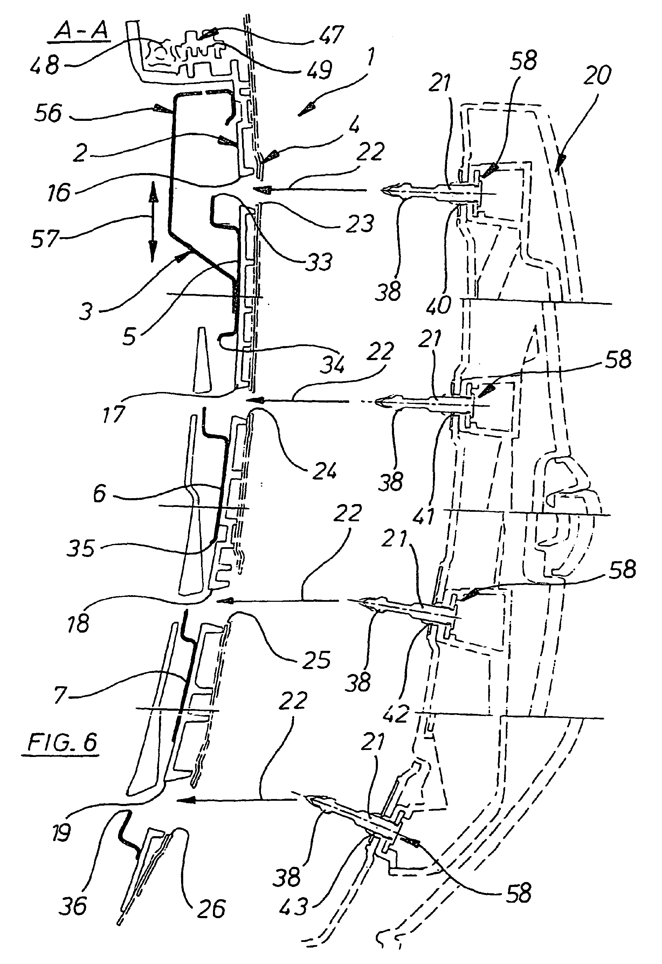

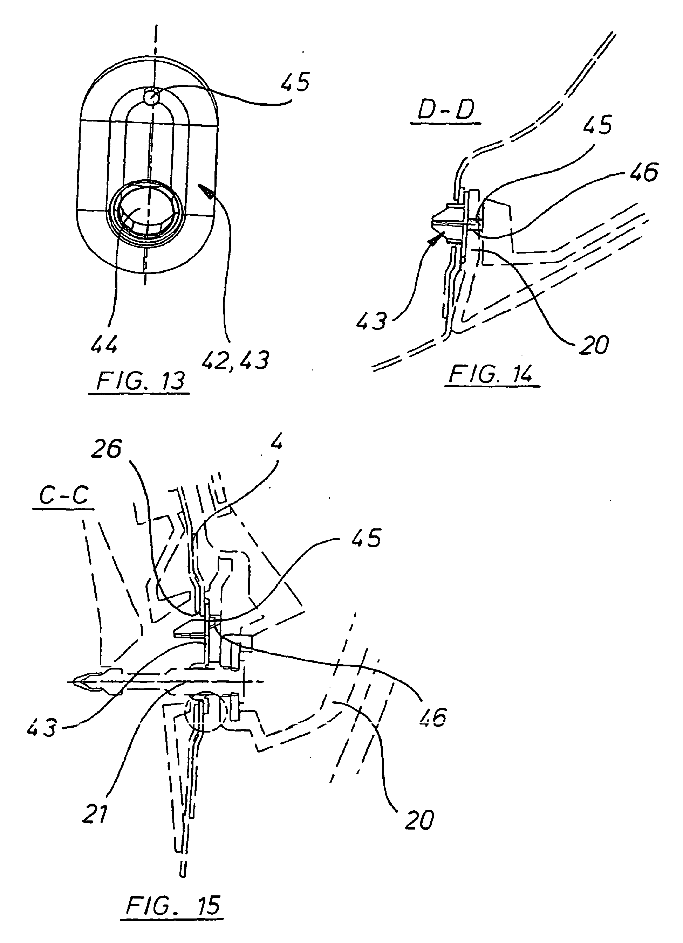

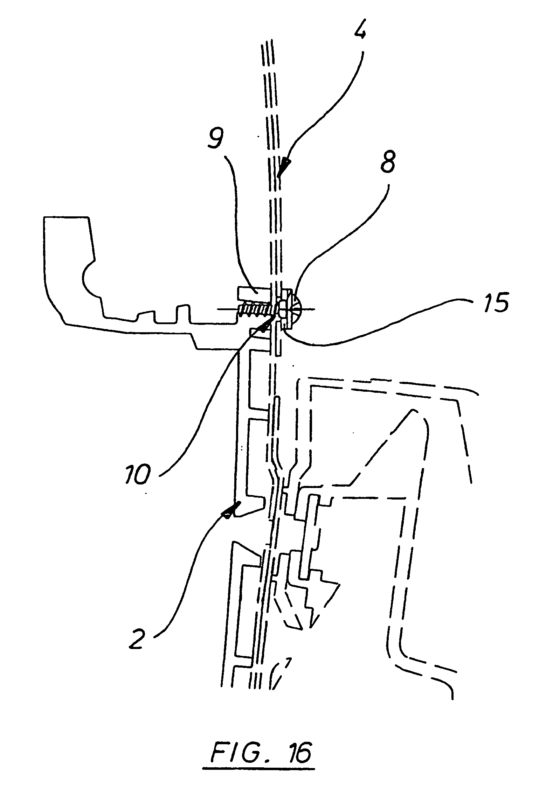

Wie dies aus Fig. 6, die einen Schnitt entlang der Linie A-A der Fig. 5 zeigt, ersichtlich ist, kann die gewölbte Gehäuseschale 2 bereits in einem relativ frühen Montagezustand des Fahrzeugs von innen her in einer vorzugsweise mehr flächigen Anlageverbindung an einem ebenfalls gewölbten Heck-Abschlussteil 4 angeordnet werden. Dazu werden in die insbesondere aus den Fig. 1 und 5 ersichtlichen Schraublöcher 9 der Gehäuseschale, die in Gehäuseschalenlängsrichtung beabstandet voneinander angeordnet sind, den Schraublöchern 9 entsprechend zugeordnete Befestigungsschrauben durch ebenfalls den Schraublöchern 9 zugeordnete Abschlussteil-Durchgangsöffnungen 10 hindurch eingeschraubt, wie dies beispielhaft für eine Schraubverbindung in der Fig. 16 dargestellt ist. Zur Abdichtung der Abschlussteil-Durchgangsöffnungen 10 kann ferner ein Dichtelement 15 vorgesehen sein.

Wie dies aus Fig. 6 weiter ersichtlich ist, wird die erfindungsgemäße Befestigungsvorrichtung 1 in Fahrzeughochachsenrichtung ausgerichtet. An der in der zuvor beschriebenen Anlageverbindung von innen her am Heck-Abschlussteil 4 anliegenden Gehäuseschale 2 sind in Gehäuseschalenlängsrichtung voneinander beabstandete sowie gegenüber der Längsmitte nach links und rechts versetzte Gehäuseschalen-Ausnehmungen 16, 17, 18 und 19 ausgebildet. Wie dies insbesondere auch aus den Fig. 1 und 5 ersichtlich ist, weisen die Gehäuseschalen-Ausnehmungen 16 und 17, die in einem mehr ebenen Heck-Abschlussteilbereich am Heck-Abschlussteil 4 anliegen eine mehr kreisförmige Lochgeometrie auf, während die Gehäuseschalen-Ausnehmungen 18 und 19, die in einem mehr gewölbten Heck-Abschlussteilbereich am Heck-Abschlussteil 4 anliegen dagegen eine Langloch-Geometrie aufweisen. Die Gehäuseschalen-Ausnehmung 19 liegt in einem Bereich mit einem größeren Krümmungsradius als die Gehäuseschalen-Ausnehmung 18, so dass die Gehäuseschalen-Ausnehmung 19 mit einer entsprechend größeren Langlochgeometrie ausgebildet ist. Durch diese spezielle Langlochgeometrie der Gehäuseschalen-Ausnehmungen wird erreicht, dass an einem Stoßfängerüberzug 20 angeordnete Rastbolzen 21 mit einer in etwa bezogen auf einen Fußbodenbereich horizontalen Montagerichtung, d. h. ohne Verkippen des Stoßfängerüberzugs 20, wie dies in der Fig. 6 durch die Pfeile 22 angedeutet ist, in den Bereich der Befestigungsvorrichtung 1 durch entsprechend den Gehäuseschalen-Ausnehmungen 16 bis 19 zugeordnete Abschlussteil-Ausnehmungen 23 bis 26 hindurch in den Bereich der Befestigungsvorrichtung 1 gebracht werden können. Wie dies aus der Fig. 6 ersichtlich ist, weisen auch die Abschlussteil-Ausnehmungen 23 und 24, die den Gehäuseschalen-Ausnehmungen 16 und 17 zugeordnet sind, eine in etwa kreisförmige Lochgeometrie auf, während die den Gehäuseschalen-Ausnehmungen 18 und 19 zugeordneten Abschlussteil-Ausnehmungen 25 und 26 ebenfalls eine Langlochgeometrie aufweisen.

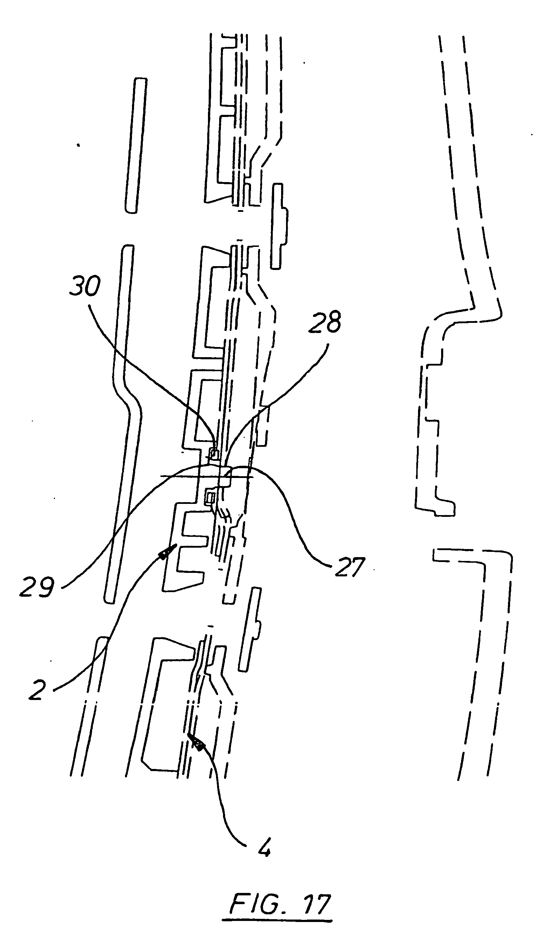

Für eine einfache Vorpositionierung der Befestigungsvorrichtung 1 im Rahmen des Anbringens von innen her am Heck-Abschlussteil 4 sind an der Gehäuseschale 2 ferner Positionierzapfen 27 angeformt (Fig. 1 und Fig. 5), die, wie dies aus der Fig. 17 ersichtlich ist, im montierten Zustand der Gehäuseschale 2 am Heck-Abschlussteil 4 in eine entsprechende Positionierausnehmung 28 als Positionieröffnung eingreifen. Wie dies aus den Fig. 1, 5 und 17 weiter ersichtlich ist, ist um die Positionierzapfen 27 herum an der Gehäuseschalenwand ferner eine kreisringförmige Ausnehmung 29 ausgebildet, in die ein Dichtelement 30 einsetzbar ist, wobei dieses Dichtelement 30 einen leichten Überstand gegenüber einem oberen Randbereich der kreisringförmigen Ausnehmung 29 aufweist. Durch diesen Überstand wird im befestigten Zustand der Gehäuseschale 2 am Heck-Abschlussteil 4 ein gutes Verpressen des Dichtelements 30 am Heck-Abschlussteil 4 erreicht, so dass hierdurch eine gute Dichtfunktion bzw. auch eine klapperfreie und geräuschdämpfende Anlage geschaffen wird. Mittels dieser Positionierzapfen 27 kann die Gehäuseschale 2 im Rahmen der Montage sehr schnell und einfach in der richtigen Position am Heck-Abschlussteil 4 vorpositioniert werden und anschließend auf schnelle Art und Weise die Festlegung der Gehäuseschale 2 durch Einschrauben der Befestigungsschrauben 8 in die Schraublöcher 9 erfolgen.

Wie dies insbesondere aus der Fig. 6 ersichtlich ist, ist an der Gehäuseschale 2 die Rastleiste 3 relativ dazu verschiebbar gelagert. Dazu umgreift die Gehäuseschale 2 die Rastleiste 3 mit gegenüberliegenden Gehäuseseitenwandbereichen 31 seitlich, wie dies insbesondere auch aus der Fig. 1 ersichtlich ist, wobei in den Gehäuseschalenseitenwandbereichen in Längsrichtung durchgehende nutförmige Führungsschlitze ausgebildet sind, die hier nicht explizit dargestellt sind und in denen die Rastleiste mit an gegenüberliegenden Leistenseiten abschnittsweise ausgebildeten Eingriffselementen 32 verschiebbar geführt aufgenommen ist. Die Eingriffselemente 32 sind insbesondere aus Fig. 3 gut ersichtlich.

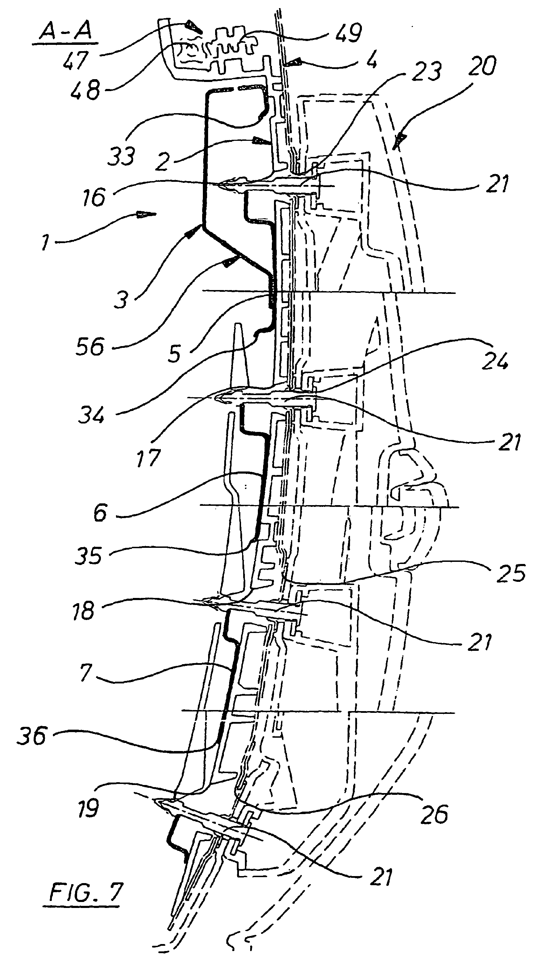

Wie dies insbesondere in den Darstellungen der Fig. 3 und 4 sowie auch der Schnittdarstellung der Fig. 6 zu entnehmen ist, weist die Rastleiste 3 den Gehäuseschalen-Ausnehmungen 16 bis 19 und damit auch den Abschlussteil-Ausnehmungen 23 bis 26 zugeordnete Rastschlitze 33 bis 36 auf, die jeweils eine in etwa schlüsselförmige Rastschlitzgeometrie aufweisen. Die einzelnen Rastschlitze 33 bis 36 sind ebenfalls gegenüber der Längsmitte der Rastleiste 3 zum Teil nach links und rechts versetzt, wobei die Rastschlitze 33 bis 36 jeweils einen ersten Schlitzbereich 37 als Verriegelungsbereich aufweisen, der, wie dies insbesondere aus der Fig. 7 ersichtlich ist, im montierten Zustand des Stoßfängerüberzugs 20 einen entsprechenden Rastbolzen-Verriegelungsbereich 38 hintergreift zur Verriegelung des Rastbolzens 21 und damit des Stoßfängerüberzugs 20 am Heck-Abschlussteil 4. Der sich an den ersten Schlitzbereich 37 unmittelbar anschließende zweite Schlitzbereich 39 weist dagegen, wie dies insbesondere aus den Fig. 3 und 4 ersichtlich ist, ein Übermaß gegenüber dem Rastbolzen-Verriegelungsbereich 38 auf, so dass der Rastbolzen 21 im zweiten Schlitzbereich 39 ungehindert in die jeweiligen Rastschlitze 33 bis 36 einführbar bzw. durchsteckbar ist. Auch die zweiten Schlitzbereiche 39 weisen eine im gewölbten Bereich je nach Krümmungsradius eine mehr oder weniger stark ausgebildete Langlochgeometrie auf, aus demselben Gründen, wie dies zuvor in Verbindung mit den Gehäuseschalen-Ausnehmungen 16 bis 19 geschildert worden ist. D. h., dass der zweite Schlitzbereich 39 des Rastschlitzes 36 die größte Langlochgeometrie aufweist.

Wie dies insbesondere aus den Fig. 4 und 6 weiter ersichtlich ist, ist die Rastleiste 3 im Bereich der Rastschlitze 33 bis 36 zur Ausbildung einer Vorspannfunktion, die nachfolgend noch näher erläutert wird, abgewinkelt ausgebildet, und zwar dergestalt, dass die an die abgewinkelten Rastschlitze 33 bis 36 angrenzenden Rastleistenbereiche 5 bis 7 in etwa in einer flächigen Anlageverbindung an der Gehäuseschale 2 anliegen und sich dort abstützen.

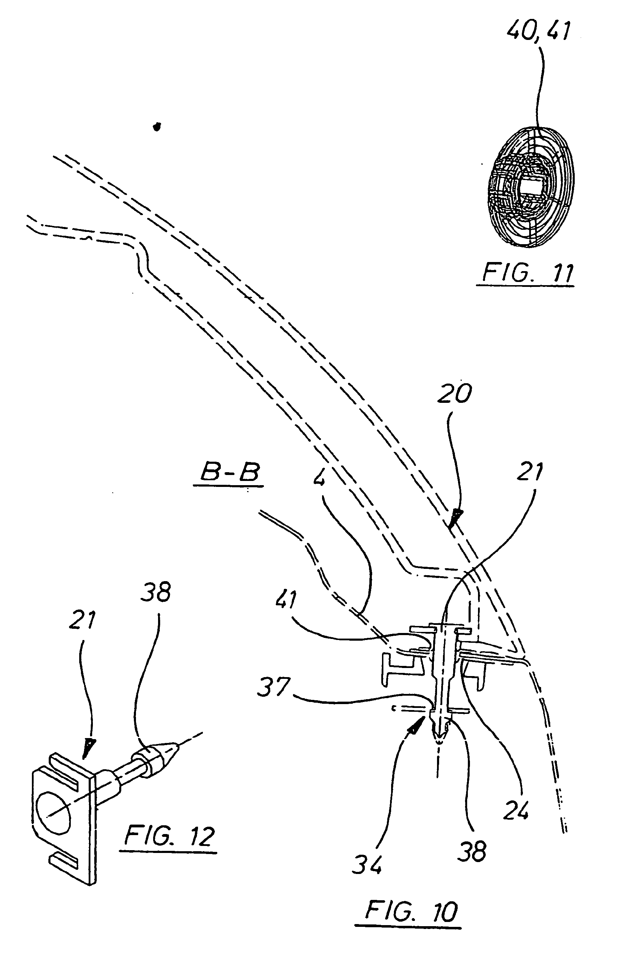

Um im verriegelten Zustand eine Abdichtung der Abschlussteil-Ausnehmungen 23 bis 26 gegenüber den Rastbolzen 21 zu erzielen, sind Dichtungstüllen vorgesehen. Die Dichtungstüllen für die Abschlussteil-Ausnehmungen 23 und 24, die in etwa eine kreisringförmige Kontur aufweisen, sind in der Fig. 11 schematisch und perspektivisch dargestellt. In der Fig. 10 ist ein schematischer Längsquerschnitt entlang der Linie B-B der Fig. 5 im montierten Zustand der Befestigungsvorrichtung 1 gezeigt, in der beispielhaft die Einbauposition der Dichtungstüllen 41 mit in etwa kreisringförmiger Kontur gezeigt ist. Gleichzeitig ist hier auch nochmals die Verriegelung des Rastbolzen-Verriegelungsbereichs im ersten Schlitzbereich 37 des Rastschlitzes 34 der Rastleiste 3 in vergrößerter Darstellung gezeigt.

Die eine mehr oder weniger Langlochgeometrie aufweisenden Abschlussteil-Ausnehmungen 25, 26 sind dagegen mit einer sogenannten Langloch-Tülle 42, 43 abgedichtet, wie dies schematisch und teilweise perspektivisch in der Fig. 13 dargestellt ist. Fig. 15 zeigt einen vergrößerten Querschnitt entlang der Linie C-C der Fig. 5 im montierten Zustand der Befestigungsvorrichtung 1, aus dem heraus der Einsatz der Langloch-Tülle 43 in die Abschlussteil-Ausnehmung 26 ersichtlich ist. Fig. 14 zeigt dagegen einen schematischen Längsquerschnitt entsprechend der Linie D-D der Fig. 5 im montierten Zustand der Befestigungsvorrichtung. Wie dies aus den Fig. 13 bis 15 ersichtlich ist, weisen die Langloch-Tüllen jeweils eine Rastbolzen-Durchführöffnung 44 auf, durch die der jeweilige Rastbolzen 21 dicht durchführbar ist. Ferner weist die Langloch-Tülle 43 beabstandet zur Rastbolzen-Durchführöffnung 44 einen Tüllen-Zentrierzapfen 45 auf, dem eine entsprechende Zentrierausnehmung 46 am Stoßfängerüberzug 20 zugeordnet ist, so dass der Tüllen-Zentrierzapfen 45 im montieren Zustand des Stoßfängerüberzugs im Wesentlichen formschlüssig in der Zentrierausnehmung 46 des Stoßfängerüberzugs 20 aufgenommen ist.

Wie dies den Fig. 1, 5 sowie 6 bis 9 weiter zu entnehmen ist, umfasst die Befestigungsvorrichtung 1 weiter am in Fahrzeughochachsenrichtung gesehen oberen Gehäuseschalenbereich eine durch ein Schneckengetriebe 47 gebildete Verlagerungseinrichtung. Dieses Schneckengetriebe 47 weist eine Antriebsschnecke 48 und ein damit kämmendes Schneckenrad 49, das als Zahnrad ausgebildet ist, auf. Das Schneckenrad 49 ist mit einem Spindelantrieb 50 verbunden, der als Spindel eine drehfest mit dem Schneckenrad 49 verbundene Gewindeschraube 51 aufweist, die in Fahrzeughochachsenrichtung gesehen in etwa senkrecht nach unten durch eine am oberen Rastleistenbereich angeordnete Spindelmutter 52 hindurch geführt ist, die als mit dem Rastteil verpresste Blindnietmutter ausgebildet ist.

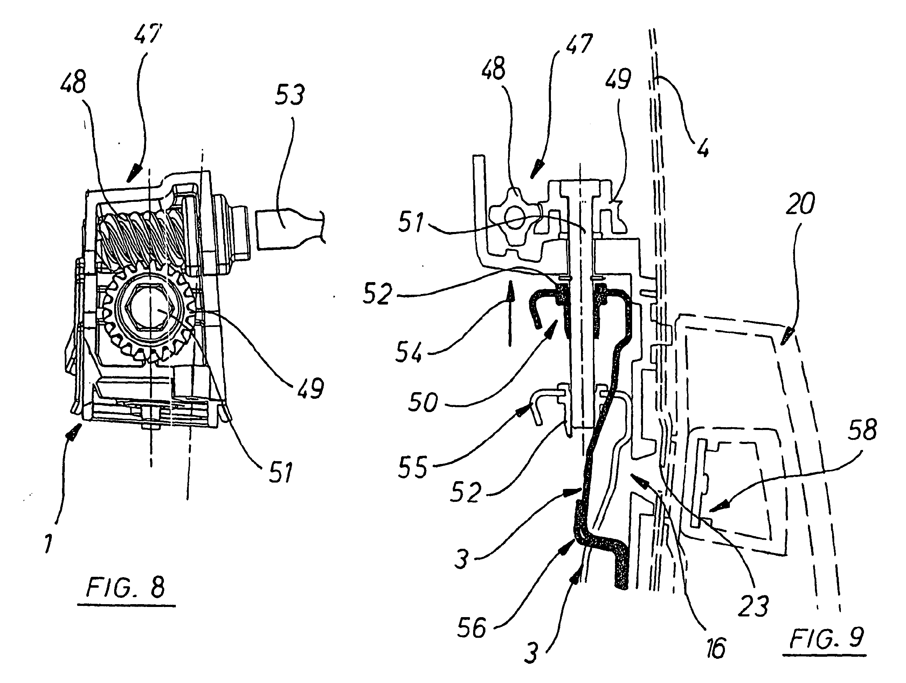

Wie dies insbesondere aus der Fig. 5 ersichtlich ist, ist die Rastleiste 3 in einer dort gezeigten Grundstellung mit den ein Übermaß aufweisenden zweiten Schlitzbereichen 39 der Rastschlitze 33 bis 36 den Gehäuseschalen-Ausnehmungen 16 bis 19 und damit auch den Abschlussteil-Ausnehmungen 23 bis 26 zugeordnet. Dadurch können die Rastbolzen 21 des Stoßfängerüberzugs 20 schnell und einfach in die Rastschlitze 33 bis 36 eingeführt werden. Anschließend wird dann, wie dies in der Fig. 8 schematisch durch die Spitze eines Schraubendrehers 53 dargestellt ist, das Schneckengetriebe 47 betätigt, wodurch die Rastleiste 3, wie dies in der Fig. 9 durch den Pfeil 54 dargestellt ist relativ zur Gehäuseschale 2 aus der in der Fig. 9 hell dargestellten Grundstellung 55 heraus in die in der Fig. 9 dunkel dargestellte Verriegelungsposition verlagert wird. Die Verriegelungsposition ist auch in der Fig. 7 dargestellt. Beim Übergang von der Grundstellung 55 in die Verriegelungsposition 56 werden die Rastschlitze 33 bis 36 so relativ zur Gehäuseschale 2 verlagert, dass deren erster Schlitzbereich 37 jeweils den Rastbolzen-Verriegelungsbereich 38 eines jeden Rastbolzens 21 hintergreift. Durch die Ausbildung der Verlagerungseinrichtung als Schneckengetriebe 47 ist sichergestellt, dass durch dessen Selbsthemmung eine einmal eingenommene Verriegelungsposition auch funktionssicher beibehalten wird.

Wie dies in der Fig. 6 durch den Doppelpfeil 57 angedeutet ist, kann durch erneute Betätigung des Schneckengetriebes 47 die Verriegelung auch wieder gelöst werden. Damit lässt sich lediglich durch eine einzige Betätigung des Schneckengetriebes 47 eine schnelle und sichere Verriegelung sämtlicher einer Vorrichtung 1 zugeordneten Befestigungsstellen zur Befestigung eines Stoßfängerüberzugs 20 an einem Abschlussteil erzielen. Ebenso ist auf die gleiche Weise eine sehr schnelle Demontage mehrer Befestigungsstellen lediglich durch eine einzige Betätigung des Schneckengetriebes 47 möglich. Durch die Abwinklung der Rastleiste 3 in den Bereichen der Rastschlitze 33 bis 36 wird dabei zudem erreicht, dass die Rastleiste 3 bei der Verriegelung der Rastbolzen in den Rastschlitzen 33 bis 36 wenigstens teilweise federartig nachgibt und dadurch die einzelnen Rastbolzen 21 unter einer Vorspannung verriegelt. Dadurch wird ein besonders sicherer und auch klapperfreier Aufbau erzielt, so dass hierdurch auch auf vorteilhafter Weise ein Toleranzausgleich erzielt wird.

Durch den in der Fig. 6 dargestellten Doppelpfeil 57 wird die Verstellung der Rastleiste 3 schematisch angezeigt. In der Darstellung der Fig. 6 befindet sich die Rastleiste 3 gerade in der Verriegelungsposition 56, d. h. müsste zum Einfädeln der Rastbolzen 26 nach unten in die Grundstellung 55 verlagert werden.

Wie dies der Fig. 12 insbesondere in Verbindung mit den Fig. 6 und 7 zu entnehmen ist, ist der Rastbolzen 21 als separates Bauteil ausgebildet, der in einem entsprechend ausgebildeten Stoßfängerüberzug-Schließbereich 58 festlegbar, vorzugsweise verklemmbar und/oder verrastbar ist.

Grundsätzlich kann zur Befestigung eines Stoßfängerüberzugs an z. B. einem Heck-Abschlussteil links und rechts jeweils eine erfindungsgemäße Befestigungsvorrichtung 1 am Heck-Abschlussteil angeordnet sein. Dann sind zur Verriegelung bzw. Befestigung des Stoßfängerüberzugs nur zwei Handgriffe im Rahmen der Endmontage erforderlich.

## Patentansprüche

1. Vorrichtung zur Befestigung eines Stoßfängerüberzugs an einem Fahrzeug, insbesondere an einem Kraftfahrzeug,
mit einem Basisteil (2), das fahrzeugseitig an einem Fahrzeug-Abschlussteil (4) festlegbar ist,
wobei am Basisteil (2) ein Rastteil (3) angeordnet ist, das mittels einer Verlagerungseinrichtung (47) relativ zum Basisteil (2) zwischen einer Rastteil-Grundstellung (55) und einer Rastteil-Verriegelungsstellung (56) verlagerbar ist,
wobei am Rastteil (3) wenigstens eine Rast-Ausnehmung (33 ,34, 35, 36) vorgesehen ist, die so ausgebildet ist, dass jeder am Stoßfängerüberzug (20) anordenbare und jeweils einer Rast-Ausnehmung (33, 34, 35, 36) zuordenbare Stoßfängerüberzug-Rastbolzen (21) in der Rastteil-Grundstellung (55) in die zugeordnete Rast-Ausnehmung (33, 34, 35, 36) einführbar ist und anschließend lediglich durch eine Betätigung der Verlagerungseinrichtung (47) eine Verlagerung des Rastteils (3) durchführbar ist zur Verriegelung sämtlicher Rastbolzen (21) mit dem Rastteil und damit zur Festlegung des Stoßfängerüberzugs (20) am Fahrzeug-Abschlussteil (4),
**dadurch gekennzeichnet,**
**dass** die Verlagerungseinrichtung am Basisteil (2) durch ein Schneckengetriebe (47) gebildet ist, das mit dem Rastteil (3) gekoppelt ist und eine Antriebsschnecke (48) sowie ein mit der Antriebsschnecke (48) kämmendes Schneckenrad (49) aufweist.

2. Vorrichtung nach Anspruch 1, **dadurch gekennzeichnet, dass** das Rastteil durch eine Rastleiste (3) gebildet ist, die in Rastleistenlängsrichtung gesehen mehrere voneinander beabstandete Rast-Ausnehmungen (33, 34, 35, 36) aufweist.

3. Vorrichtung nach Anspruch 2, **dadurch gekennzeichnet,**
**dass** die Rast-Ausnehmung durch einen in Rastleistenlängsrichtung als Verlagerungsrichtung verlaufenden schlüssellochartig ausgebildeten Rastschlitz (33, 34, 35, 36) gebildet ist, der in einem ersten Schlitzbereich (37) als Verriegelungsbereich einen entsprechend zugeordneten Rastbolzen-Verriegelungsbereich (38), der am freien Rastbolzenende durch eine sich daran anschließende Abstufung und/oder Umfangsreduzierung als Nutbereich gebildet ist, hintergreift und der in einem zweiten, sich an den ersten Schlitzbereich (37) anschließenden Schlitzbereich (39) mit einem Übermaß gegenüber dem Rastbolzen-Verriegelungsbereich (38) ausgebildet ist, so dass der Rastbolzen (21) im zweiten Schlitzbereich (39) der Rast-Ausnehmung (33, 34, 35, 36) einführbar und/oder durchsteckbar ist, und
**dass** der zweite Schlitzbereich (39) in Verlagerungsrichtung der Rastleiste (3) gesehen vor dem ersten Schlitzbereich (37) liegt, so dass die in den zweiten Schlitzbereich (39) eingeführten Rastbolzen (21) bei einer Verlagerung der Rastleiste (3) in Verlagerungsrichtung mit dem ersten Schlitzbereich (37) verriegelbar sind.

4. Vorrichtung nach Anspruch 2 oder Anspruch 3, **dadurch gekennzeichnet, dass** die Rastleiste (3) so am Basisteil (2) gelagert und/oder aus einem solchen Material hergestellt ist, dass die Rastleiste (3) bei der Verriegelung des Rastbolzens (21) in der Rast-Ausnehmung (33, 34, 35, 36) wenigstens teilweise federartig nachgibt und den Rastbolzen (21) unter Vorspannung verriegelt.

5. Vorrichtung nach Anspruch 4, **dadurch gekennzeichnet, dass** die Rastleiste (3) im Bereich der Rast-Ausnehmung (33, 34, 35, 36) zur Ausbildung der Vorspannfunktion abgewinkelt ist dergestalt, dass lediglich die an die abgewinkelten Rast-Ausnehmungsbereiche angrenzenden Leistenbereiche (5, 6, 7) in einer Anlageverbindung am Basisteil (2) anliegen und sich dort während der Verriegelung abstützen.

6. Vorrichtung nach einem der Ansprüche 1 bis 5, **dadurch gekennzeichnet,**
**dass** das Basisteil (2) von innen her wenigstens mit Teilbereichen an einem Fahrzeug-Abschlussteil (4) anliegt,
**dass** im Fahrzeug-Abschlussteil (4) eine jeder Rast-Ausnehmung (33, 34, 35, 36) des Rastteils (3) zugeordnete Abschlussteil-Ausnehmung zur Durchführung des Rastbolzens (21) vorgesehen ist, und
**dass** das Basisteil (2) so ausgebildet ist, dass dieses die Zuführung des Rastbolzens (21) zur Rast-Ausnehmung (33, 34, 35, 36) des Rastteils (3) freigibt.

7. Vorrichtung nach Anspruch 6, **dadurch gekennzeichnet, dass** zur Freigabe der Zuführung zur Rast-Ausnehmung (33, 34, 35, 36) am Basisteil (2) eine jeder Rast-Ausnehmung (33, 34, 35, 36) des Rastteils (3) zugeordnete Basisteil-Ausnehmung (16, 17, 18, 19) vorgesehen ist.

8. Vorrichtung nach Anspruch 6 oder Anspruch 7, **dadurch gekennzeichnet, dass** das Basisteil (2) der in Fahrzeughochachsenrichtung gesehen gewölbten Kontur des Fahrzeug-Abschlussteils (4) folgt, wobei im Falle eines als Rastleiste (3) ausgebildeten Rastteils mit mehreren, sich in Fahrzeughochachsenrichtung als Rastleistenlängsrichtung erstreckenden und voneinander beabstandeten Rast-Ausnehmungen (33, 34, 35, 36) sowohl die Rast-Ausnehmungen (33, 34, 35, 36) in einem ein Übermaß gegenüber dem Rastbolzen aufweisenden Rastschlitzbereich (39), als auch die Abschlussteil-Ausnehmungen (23, 24, 25, 26) und die Basisteil-Ausnehmungen (16, 17, 18, 19) im gewölbten Bereich in etwa eine Langlochgeometrie aufweisen, die mit zunehmendem Krümmungsradius des gewölbten Bereiches in der Längenausdehnung größer wird, während die Rast-Ausnehmungen (33, 34, 35, 36) und die Abschlussteil-Ausnehmungen (23, 24, 25, 26) sowie die Basisteil-Ausnehmungen (16, 17, 18, 19) in nicht gewölbten Bereichen eine in etwa kreisrunde Lochgeometrie aufweisen.

9. Vorrichtung nach einem der Ansprüche 6 bis 8, **dadurch gekennzeichnet, dass** jeder Rastbolzen (21) im montierten Zustand des Stoßfängerüberzugs (20) mittels einer den Rastbolzen (21) umgebenden Dichtungstülle (40, 41, 42, 43) dicht durch die Abschlussteil-Ausnehmung (23, 24, 25, 26) hindurchgeführt ist.

10. Vorrichtung nach Anspruch 8 und Anspruch 9, **dadurch gekennzeichnet,**
**dass** die abschlussteilseitige Abdichtung der Abschlussteil-Langlöcher gegenüber dem jeweils zugeordneten Rastbolzen (21) durch Langloch-Tüllen (42, 43) erfolgt,
**dass** die Langloch-Tülle (42, 43) eine Rastbolzen-Durchführöffnung (44) aufweist, durch die der Rastbolzen (21) dicht durchführbar ist, und
**dass** die Langloch-Tülle (42, 43) beabstandet zur Rastbolzen-Durchführöffnung (44) einen Tüllen-Zentrierzapfen (45) aufweist, dem eine entsprechende Zentrierausnehmung (46) am Stoßfängerüberzug (20) im Bereich des Rastbolzens (21) zugeordnet ist dergestalt, dass der Tüllen-Zentrierzapfen (45) im montierten Zustand des Stoßfängerüberzugs (20) formschlüssig in der Zentrierausnehmung (46) am Stoßfängerüberzug (20) aufgenommen ist.

11. Vorrichtung nach einem der Ansprüche 1 bis 10, **dadurch gekennzeichnet,**
**dass** zur Befestigung des Basisteils (2) am Abschlussteil (4) mehrere Schraubverbindungen vorgesehen sind, wobei am Basisteil (2) Schraublöcher (9) ausgebildet sind, die von innen her im Bereich entsprechender Abschlussteil-Durchgangsöffnungen (10) anliegen, so dass von der Abschlussteil-Außenseite her eine Befestigungsschraube (8) in die Schraublöcher (9) einschraubbar ist.

12. Vorrichtung nach einem der Ansprüche 1 bis 11, **dadurch gekennzeichnet, dass** am Basisteil (2) Positionierzapfen (27) ausgebildet sind, die in entsprechende Positionierausnehmungen (28) am Abschlussteil (4) formschlüssig einsetzbar sind, wobei im Falle von Positionieröffnungen als Positionierausnehmungen (28) zusätzlich ein Dichtelement (30) im Öffnungsbereich (29) um den Positionierzapfen (27) herum vorgesehen ist.

13. Vorrichtung nach einem der Ansprüche 1 bis 12, **dadurch gekennzeichnet, dass** das Schneckenrad (49) mit einem Spindelantrieb (50) zur Verlagerung des Rastteils (3) verbunden ist dergestalt, dass das Schneckenrad (49) mit einer Gewindeschraube (51) als Spindel drehfest verbunden ist, der am Rastteil (3) eine Gewindehülse als Spindelmutter (52) zugeordnet ist.

14. Vorrichtung nach einem der Ansprüche 2 bis 13, **dadurch gekennzeichnet,**
**dass** das Basisteil als Gehäuseschale (2) ausgebildet ist, in der die Rastleiste (3) relativ dazu verschiebbar aufgenommen ist, wobei eine Schalenbasiswand die Rastleiste (3) wenigstens bereichsweise in Rastleistenlängsrichtung abdeckt,
**dass** die Gehäuseschale (2) die Rastleiste (3) in Verlagerungsrichtung gesehen mit gegenüberliegenden Gehäuseschalenseitenwandbereichen (31) wenigstens teilweise seitlich umgreift, und
**dass** in den Gehäuseschalenseitenwandbereichen (31) nutförmige Führungsschlitze ausgebildet sind, in denen die Rastleiste (3) mit an den gegenüberliegenden Leistenseiten wenigstens abschnittsweise ausgebildeten Eingriffselementen (32) verschiebbar geführt aufgenommen ist.

15. Vorrichtung nach Anspruch 14, **dadurch gekennzeichnet,**
**dass** der Gehäuseschale (2) ferner ein Abdeckelement (11) zugeordnet ist, das zur Ausbildung eines die Rastleiste (3) wenigstens bereichsweise vollständig umschließenden Gehäuses mit der Gehäuseschale (2) lösbar verbindbar ist.

16. Vorrichtung nach Anspruch 14 oder Anspruch 15, **dadurch gekennzeichnet, dass** an der Gehäuseschale (2) und/ oder am Abdeckelement (11) ferner eine Befestigungseinrichtung für einen Kabelbaum angeformt ist.

17. Vorrichtung nach einem der Ansprüche 1 bis 16, **dadurch gekennzeichnet,**
**dass** der Rastbolzen (21) als separates Bauteil mit einer form- und/oder kraftschlüssigen Eingriffs- und/oder Rast- und/oder Klemmverbindung an einem als entsprechendes Stoßfängerüberzug-Gegenelement ausgebildeten Stoßfängerüberzug-Schließtereich (58) festlegbar ist.

18. Vorrichtung nach einem der Ansprüche 1 bis 17, **dadurch gekennzeichnet, dass** das Basisteil (2) aus einem Kunststoffmaterial und/oder das Rastteil (3) aus einem Blech hergestellt ist.

## Claims

1. Device for fastening a bumper skin to a vehicle, in particular an automotive vehicle, having a base part (2) which can be secured, on the side adjacent the vehicle, to an end part (4) of a vehicle, there being arranged on the base part (2) a part for latched locking (3) which, by means of a displacing means (47), can be displaced relative to the base part (2) between a basic position (55) for the part for latched locking and a locking position (56) for the part for latched locking, there being provided in the part for latched locking (3) at least one opening for latched locking (33, 34, 35, 36) which is so formed that each bumper-skin spigot for latched locking (21), which can be arranged on the bumper skin (20) and can be associated with a respective opening for latched locking (33, 34, 35, 36), can be inserted in the associated opening for latched locking (33, 34, 35, 36) when the part for latched locking is in its basic position (55), and a displacement of the part for latched locking (3) can then be brought about, simply by actuating the displacing means (47), to lock all the spigots for latched locking (21) to the part for latched locking and hence to secure the bumper skin (20) to the end part (4) of the vehicle, **characterised in that** the displacing means on the base part (2) is formed by worm gearing (47) which is coupled to the part for latched locking (3) and which has a driving worm (48), and a worm wheel (49) which meshes with the driving worm (48).

2. Device according to claim 1, **characterised in that** the part for latched locking is formed by a strip for latched locking (3) which, looking in the longitudinal direction of the strip for latched locking, has a plurality of openings for latched locking (33, 34, 35, 36) which are spaced apart from one another.

3. Device according to claim 2, **characterised in that** the opening for latched locking is formed by a slot for latched locking (33, 34, 35, 36) of a keyhole-like shape which extends in the longitudinal direction of the strip for latched locking, which direction forms a direction of displacement, which slot for latched locking (33, 34, 35, 36), in a first region (37) of the slot which forms a locking region, fits behind a suitably associated locking region (38) of the spigot for latched locking which is formed at the free end of the spigot for latched locking by a step and/or a reduction in circumference which follow/follows on from the free end and forms a grooved region, and which slot for latched locking (33, 34, 35, 36), in a second region (38) of the slot which follows on from the first region (37) of the slot, is formed to be of an oversize relative to the locking region (38) of the spigot for latched locking, thus enabling the spigot for latched locking (21) to be inserted and/or pushed through in the second region (39) of the slot formed by the opening for latched locking (33, 34, 35, 36), and **in that** the second region (39) of the slot is situated upstream of the first region (37) of the slot, looking in the direction of displacement of the strip for latched locking (3), thus enabling the spigots for latched locking (21) which have been inserted in the second region (39) of the slots to be locked by the first region (37) of the slots when the strip for latched locking (3) is displaced in the direction of displacement.

4. Device according to claim 2 or claim 3, **characterised in that** the strip for latched locking (3) is so mounted on the base part (2) that, and/or is made of a material such that, when the spigot for latched locking (21) is locked in the opening for latched locking (33, 34, 35, 36), at least part of the strip for latched locking (3) yields in a resilient manner and locks the spigot for latched locking (21) under a pre-loading.

5. Device according to claim 4, **characterised in that**, to perform the pre-loading function, the strip for latched locking (3) is angled in the region of the opening for latched locking (33, 34, 35, 36) in such a way that the regions of the strip which bear against the base part (2) in a connection by contact and which are supported there during the locking are only those (5, 6, 7) which adjoin the angled regions at the openings for latched locking.

6. Device according to one of claims 1 to 5, **characterised in that** at least sub-regions of the base part (2) bear against an end part (4) of the vehicle from inside, **in that** there is provided in the end part (4) of the vehicle an opening for the spigot for latched locking (21) to pass through, there being such an opening associated with each opening for latched locking (33, 34, 35, 36) in the part for latched locking (3), and **in that** the base part (2) is so formed that it provides an open path for the spigot for latched locking (21) to be fed into the opening for latched locking (33, 34, 35, 36) in the part for latched locking (3).

7. Device according to claim 6, **characterised in that**, to provide an open path for feeding into the opening for latched locking (33, 34, 35, 36), there is provided in the base part (2) an opening (16, 17, 18, 19) associated with each opening for latched locking (33, 34, 35, 36) in the part for latched locking (3).

8. Device according to claim 6 or claim 7, **characterised in that** the base part (2) follows the outline of the end part (4) of the vehicle, which is curved looking in the direction of the vertical axis of the vehicle, in which case, when the part for latched locking is in the form of a strip for latched locking (3) and has a plurality of openings for latched locking (33, 34, 35, 36) which extend in the direction of the vertical axis of the vehicle, which axis forms the longitudinal direction of the strip for latched locking, and which are spaced apart from one another, the geometry of both the openings for latched locking (33, 34, 35, 36), in a region (39) of the slot for latched locking which is oversized relative to the spigot for latched locking, and also of the openings (23, 24, 25, 26) in the end part and of the openings (16, 17, 18, 19) in the base part, is that of slotted holes whose lengthwise extent becomes larger as the radius of curvature of the curved region increases, whereas in the non-curved region, the geometry of the openings for latched locking (33, 34, 35, 36) and of the openings (23, 24, 25, 26) in the end part and also of the openings (16, 17, 18, 19) in the base part is that of approximately circular holes.

9. Device according to one of claims 6 to 8, **characterised in that**, when the bumper skin (20) is in the fitted state, each spigot for latched locking (21) passes through its opening (23, 24, 25, 26) in the end part with a seal, by means of a sealing grommet (40, 41, 42, 43) which surrounds the spigot for latched locking (21).

10. Device according to claim 8 and claim 9, **characterised in that**, on the side on which the end part is situated, the sealing of the slotted holes in the end part in relation to their respective associated spigots for latched locking (21) is performed by grommets (42, 43) for slotted holes, **in that** the grommet (42, 43) for slotted holes has an aperture (44) for a spigot for latched locking to pass through, through which aperture (44) the spigot for latched locking (21) is able to pass with a seal, and **in that** the grommet (42, 43) for slotted holes has, spaced away for the aperture (44) for a spigot for latched locking to pass through, a grommet-locating stud (45), with which a corresponding locating opening (46) in the bumper skin (20) is associated, in the region of the spigot for latched locking (21), in such a way that, when the bumper skin (20) is in the fitted state, the grommet-locating stud (45) is received in positive engagement in the locating opening (46) in the bumper skin (20).

11. Device according to one of claims 1 to 10, **characterised in that**, to allow the base part (2) to be fastened to the end part (4), provision is made for a plurality of screwed connections, there being formed in the base part (2) screw-holes (9) which are in contact from inside in the region of corresponding through-apertures (10) in the end part, thus enabling fastening screws (8) to be screwed into the screw-holes (9) from outside the end part.

12. Device according to one of claims 1 to 11, **characterised in that** there are formed on the base part (2) positioning studs (27) which can be inserted in positive engagement in corresponding positioning openings (28) in the end part (4), there being provided in addition, when the positioning apertures are in the form of positioning openings (28), a sealing element (30) in the region (29) of the opening, around the positioning stud (27).

13. Device according to one of claims 1 to 12, **characterised in that** the worm wheel (49) is connected to a drive (50) for a spindle for displacing the part for latched locking (3), in such a way that the worm wheel (49) is connected to a screw or bolt (51), forming a spindle, to be solid in rotation therewith, which spindle has associated with it on the part for latched locking (3) a threaded sleeve acting as a spindle nut (52).

14. Device according to one of claims 2 to 13, **characterised in that** the base part is in the form of a shell (2) forming a housing in which the strip for latched locking (3) is received in such a way as to be displaceable relative thereto, a base wall of the shell covering the strip for latched locking (3), at least in a region or regions, in the longitudinal direction of the strip for latched locking, **in that**, looking in the direction of displacement, the shell (2) forming a housing fits at least partly round the sides of the strip for latched locking (3) by regions (31) of the side walls of the shell (2) forming a housing which are situated opposite one another, and **in that** groove-like guiding slots are formed in the regions (31) of the side walls of the shell (2) forming a housing, in which guiding slots the strip for latched locking (3) is received, in such a way as to be displaceably guided, by means of engaging members (32) which are formed on at least a portion or portions of opposite sides of the strip.

15. Device according to claim 14, **characterised in that** the shell (2) forming a housing also has associated with it a covering member (11) which, to produce a housing which completely encloses the strip for latched locking (3) at least in a region or regions, can be detachably connected to the shell (2) forming a housing.

16. Device according to claim 14 or claim 15, **characterised in that** a fastening means for a cable loom is also integrally formed on the shell (2) forming a housing and/or on the covering member (11).

17. Device according to one of claims 1 to 16, **characterised in that** the spigot for latched locking (21), when in the form of a separate component connectable by interengagement and/or friction by engagement and/or latched locking and/or clamping, can be secured to a enclosed region (58) of the bumper skin which forms a corresponding mating element belonging to the bumper skin.

18. Device according to one of claims 1 to 17, **characterised in that** the base part (2) is made of a plastics material and/or the part for latched locking (3) is made of sheet metal.

## Revendications

1. Dispositif de fixation d'un revêtement de pare-chocs sur un véhicule, en particulier sur un véhicule automobile,
doté d'une pièce de base (2), qui peut être fixée côté véhicule sur une pièce terminale du véhicule (4),
dans lequel une pièce d'arrêt (3), qui peut être déplacée par rapport à la pièce de base (2) entre une position de base de la pièce d'arrêt (55) et une position de verrouillage de la pièce d'arrêt (56) au moyen d'un dispositif de déplacement (47), est disposée sur la pièce de base (2),
dans lequel au moins un évidement d'arrêt (33, 34, 35, 36) est prévu sur la pièce d'arrêt (3), qui est réalisé de manière que chaque boulon d'arrêt de revêtement de pare-chocs (21) pouvant être disposé sur le revêtement de pare-chocs (20) et pouvant être associé respectivement à un évidement d'arrêt (33, 34, 35, 36) peut être introduit dans la position de base de la pièce d'arrêt (55) dans l'évidement d'arrêt (33, 34, 35, 36) et un déplacement de la pièce d'arrêt (3) peut être réalisé ensuite en actionnant simplement le dispositif de déplacement (47) pour permettre le verrouillage de tous les boulons d'arrêt (21) avec la pièce d'arrêt et pour permettre ainsi la fixation du revêtement de pare-chocs (20) sur la pièce terminale du véhicule (4),
**caractérisé en ce**
**que** le dispositif de déplacement sur la pièce de base (2) est formé par un engrenage à vis sans fin (47) qui est couplé à la pièce d'arrêt (3) et présente une vis sans fin d'entraînement (48) ainsi qu'une roue à denture hélicoïdale (49) s'engrenant avec la vis sans fin d'entraînement (48).

2. Dispositif selon la revendication 1, **caractérisé en ce que** la pièce d'arrêt est formée par une barrette à crans (3), qui vue dans la direction longitudinale de la barrette à crans présente plusieurs évidements d'arrêt (33, 34, 35, 36) espacés les uns des autres.

3. Dispositif selon la revendication 2, **caractérisé en ce,**
**que** l'évidement d'arrêt est formé par une fente d'arrêt (33, 34, 35, 36) réalisée à la manière d'un trou de serrure s'étendant dans la direction longitudinale de la barrette à crans comme direction de déplacement, qui dans une première zone de fente (37) comme zone de verrouillage prend par l'arrière une zone de verrouillage de boulon d'arrêt (38) associée en conséquence, qui est réalisée sous forme de zone de rainure au niveau de l'extrémité libre du boulon d'arrêt par une gradation et/ou une réduction de taille qui s'y raccorde, et qui est réalisée dans une deuxième zone de fente (38) se raccordant à la première zone de fente (37) avec un surdimensionnement par rapport à la zone de verrouillage du boulon d'arrêt (38) de sorte que le boulon d'arrêt (21) peut être introduit et/ou traverser la deuxième zone de fente (39) de l'évidement d'arrêt (33, 34, 35, 36) et
**que** la deuxième zone de fente (39) se trouve vue dans la direction de déplacement de la barrette à crans (3) devant la première zone de fente (37), de sorte que les boulons d'arrêt (21) introduits dans la deuxième zone de fente (39) peuvent être verrouillés avec la première zone de fente (37) lors d'un déplacement de la barrette à crans (3) dans la direction de déplacement.

4. Dispositif selon la revendication 2 ou 3, **caractérisé en ce que** la barrette à crans (3) est logée sur la pièce de base (2) et/ou fabriquée en un matériau tel que la barrette à crans (3) fléchit au moins partiellement de manière élastique lors du verrouillage du boulon d'arrêt (21) dans l'évidement d'arrêt (33, 34, 35, 36) et verrouille le boulon d'arrêt (21) précontraint.

5. Dispositif selon la revendication 4, **caractérisé en ce que** la barrette à crans (3) est pliée dans la zone de l'évidement d'arrêt (33, 34, 35, 36) pour réaliser la fonction de précontrainte de sorte que juste les zones des barrettes (5, 6, 7) adjacentes aux zones d'évidement d'arrêt pliées sont en contact dans une liaison de contact avec la pièce de base (2) et s'y appuient pendant le verrouillage.

6. Dispositif selon l'une quelconque des revendications 1 à 5, **caractérisé en ce**
**que** la pièce de base (2) s'appuie depuis l'intérieur avec au moins des zones partielles sur une pièce terminale du véhicule (4),
**que** dans la pièce terminale du véhicule (4), un évidement de la pièce terminale associé à chaque évidement d'arrêt (33, 34, 35, 36) de la pièce d'arrêt (3) est prévu pour la traversée du boulon d'arrêt (21), et
**que** la pièce de base (2) est réalisée de sorte qu'elle libère l'amenée du boulon d'arrêt (21) vers l'évidement d'arrêt (33, 34, 35, 36) de la pièce d'arrêt (3).

7. Dispositif selon la revendication 6, **caractérisé en ce qu'**un évidement de la pièce de base (16, 17, 18, 19) associé à chaque évidement d'arrêt (33, 34, 35, 36) de la pièce d'arrêt (3) est prévu pour la libération de l'amenée vers l'évidement d'arrêt (33, 34, 35, 36) au niveau de la pièce de base (2).

8. Dispositif selon la revendication 6 ou 7, **caractérisé en ce que** la pièce de base (2) suit le contour cintré vu dans la direction de l'axe vertical du véhicule de la pièce terminale du véhicule (4), dans lequel dans le cas d'une pièce d'arrêt réalisée sous forme de barrette à crans (3) dotée de plusieurs évidements d'arrêt (33, 34, 35, 36) espacés les uns des autres et s'étendant dans la direction de l'axe vertical du véhicule comme direction longitudinale de la barrette à crans, aussi bien les évidements d'arrêt (33, 34, 35, 36) dans une zone de fente d'arrêt (39) présentant un surdimensionnement par rapport au boulon d'arrêt que les évidements de la pièce terminale (23, 24, 25, 26) et les évidements de la pièce de base (16, 17, 18, 19) dans la zone cintrée présentent à peu près une géométrie de trou oblong, qui augmente avec un rayon de courbure croissant de la zone cintrée dans l'extension longitudinale alors que les évidements d'arrêt (33, 34, 35, 36) et les évidements de la pièce terminale (23, 24, 25, 26) ainsi que les évidements de la pièce de base (16, 17, 18, 19) présentent une géométrie de trou à peu près circulaire dans des zones non cintrées.

9. Dispositif selon l'une quelconque des revendications 6 à 8, **caractérisé en ce que** chaque boulon d'arrêt (21) est introduit de manière étanche par l'évidement de la pièce terminale (23, 24, 25, 26) à l'état monté du revêtement de pare-chocs (20) au moyen d'une douille d'étanchéité (40, 41, 42, 43) entourant le boulon d'arrêt (21).

10. Dispositif selon les revendications 8 et 9, **caractérisé en ce**
**que** l'étanchéification du côté de la pièce terminale des trous oblongs de la pièce terminale par rapport au boulon d'arrêt (21) associé respectivement s'effectue par des douilles à trou oblong (42, 43),
**que** la douille à trou oblong (42, 43) présente une ouverture de passage de boulon d'arrêt (44), par laquelle le boulon d'arrêt (21) peut être introduit de manière étanche et
**que** la douille à trou oblong (42, 43) espacée de l'ouverture de passage de boulon d'arrêt (44) présente une broche de centrage de douille (45), à laquelle est associé un évidement de centrage (46) correspondant sur le revêtement de pare-chocs (20) dans la zone du boulon d'arrêt (21) de sorte que la broche de centrage de douille (45) est reçue à l'état monté du revêtement de pare-chocs (20) par correspondance de forme dans l'évidement de centrage (46) au niveau du revêtement de pare-chocs (20).

11. Dispositif selon l'une quelconque des revendications 1 à 10, **caractérisé en ce**
**que** pour fixer la pièce de base (2) sur la pièce terminale (4) plusieurs vissages sont prévus, dans lequel des trous de vis (9) sont réalisés sur la pièce de base (2), qui sont en contact depuis l'intérieur dans la zone d'ouvertures de passage de la pièce terminale (10) correspondantes, de sorte qu'une vis de fixation (8) peut être vissée dans les trous de vis (9) depuis le côté extérieur de la pièce terminale.

12. Dispositif selon l'une quelconque des revendications 1 à 11, **caractérisé en ce que** des broches de positionnement (27), qui peuvent être insérées par correspondance de forme dans des évidements de positionnement (28) correspondants sur la pièce terminale (4), sont réalisées au niveau de la pièce de base (2), dans lequel dans le cas d'ouvertures de positionnement comme évidements de positionnement (28), un élément d'étanchéité (30) est prévu en plus dans la zone d'ouverture (29) autour de la broche de positionnement (27).

13. Dispositif selon l'une quelconque des revendications 1 à 12, **caractérisé en ce que** la roue à denture hélicoïdale (49) est reliée à un entraînement de broche (50) permettant de déplacer la pièce d'arrêt (3) de sorte que la roue à denture hélicoïdale (49) est reliée de façon bloquée en rotation à une vis filetée (51) comme broche, à laquelle est affectée une douille filetée comme écrou de broche (52) au niveau de la pièce d'arrêt (3).

14. Dispositif selon l'une quelconque des revendications 2 à 13, **caractérisé en ce**
**que** la pièce de base est réalisée sous forme de coquille de boîtier (2), dans laquelle la barrette à crans (3) est reçue de manière mobile par rapport à celle-ci, dans lequel une paroi de base de coquille couvre au moins par zones la barrette à crans (3) dans la direction longitudinale de la barrette à crans,
**que** la coquille de boîtier (2) entoure au moins partiellement de manière latérale la barrette à crans (3) vue dans la direction du déplacement avec des zones de paroi latérale de la coquille de boîtier (31) opposées, et
**que** des fentes de guidage en forme de rainure sont réalisées dans les zones de paroi latérale de la coquille de boîtier (31), dans lesquelles la barrette à crans (3) est reçue de manière mobile avec les éléments de prise (32) réalisés au moins par secteurs au niveau des côtés de barrettes opposés.

15. Dispositif selon la revendication 14, **caractérisé en ce**
**qu'**un élément de recouvrement (11) qui peut être relié de manière amovible à la coquille de boîtier (2) pour former un boîtier entourant entièrement au moins par zones la barrette à crans (3) est associé en outre à la coquille de boîtier (2).

16. Dispositif selon la revendication 14 ou 15, **caractérisé en ce qu'**un dispositif de fixation destiné à un faisceau de câbles épouse en plus la coquille de boîtier (2) et/ou l'élément de recouvrement (11).

17. Dispositif selon l'une quelconque des revendications 1 à 16, **caractérisé en ce**
**que** le boulon d'arrêt (21) peut être fixé comme élément de construction séparé avec une liaison d'engagement et/ou de crantage et/ou de serrage par correspondance de forme et/ou par force sur une zone de fermeture de revêtement de pare-chocs (58) réalisée sous forme de contre-élément de revêtement de pare-chocs correspondant.

18. Dispositif selon l'une quelconque des revendications 1 à 17, **caractérisé en ce que** la pièce de base (2) est fabriquée en un matériau plastique et/ou la barrette à crans (3) en une tôle.
